# EUROPEAN PATENT APPLICATION

(11) **EP 4 414 846 A1**
(43) Date of publication of application: **14.08.2024**
(21) Application number: 22885058.2
(22) Date of filing: 13.05.2022
(51) Int. Cl.: G06F 11/22

(54) **FAULT INFORMATION PROCESSING METHOD AND APPARATUS**

(30) Priority: 29.10.2021 CN 202111275477
(71) Applicant: Huawei Technologies Co., Ltd., Shenzhen, Guangdong 518129 (CN)
(72) Inventor: HE, Xiang, Shenzhen, Guangdong 518129 (CN); ZHANG, Qin, Shenzhen, Guangdong 518129 (CN); LE, Weijun, Shenzhen, Guangdong 518129 (CN); WANG, Jin, Shenzhen, Guangdong 518129 (CN)
(74) Representative: Gill Jennings & Every LLP
(86) International application number: PCT/CN2022/092584
(87) International publication number: WO 2023/071145

(57) **Abstract**

A fault information processing method is provided and is applied to a first interface including a PHY chip and a MAC chip. The method includes: After receiving first fault information sent by a second interface communicating with the first interface, the PHY chip sends second fault information to the MAC chip. The first fault information indicates that the second interface detects a fault, and the second fault information indicates that the fault is from the second interface. Because the PHY chip has received the first fault information, a link between the PHY chip and the second interface is normal. Because the MAC chip can normally receive the second fault information, it indicates that communication between the PHY chip and the MAC chip is normal. The fault information processing method is used to determine the fault from the second interface. A fault information processing apparatus, a chip, a storage medium, and a program product are further disclosed.

## Description

This application claims priority to Chinese Patent Application No. 202111275477.7, filed with the China National Intellectual Property Administration on October 29, 2021 and entitled "FAULT INFORMATION PROCESSING METHOD AND APPARATUS", which is incorporated herein by reference in its entirety.

### TECHNICAL FIELD

This application relates to the communication field, and in particular, to a fault information processing method and apparatus.

### BACKGROUND

When a fault occurs in communication between interfaces, it is particularly important to locate the fault.

In some scenarios, a physical layer (physical, PHY) chip and a media access control (media access control, MAC) chip of an Ethernet interface are two different chips. This is briefly referred to as "PHY and MAC separation". Currently, in a scenario in which PHY and MAC are separated, if a fault occurs in communication between an interface A and an interface B, a specific location of the fault cannot be determined.

In view of this, a solution is urgently needed to resolve the foregoing problem.

### SUMMARY

Embodiments of this application provide a fault information processing method and apparatus, to determine a specific location of a fault in a scenario in which PHY and MAC are separated.

According to a first aspect, an embodiment of this application provides a fault information processing method. The method may be applied to a first interface, and the first interface includes a PHY chip and a MAC chip. In an example, the method may be performed by the PHY chip of the first interface. After receiving first fault information sent by a second interface communicating with the first interface, the PHY chip may send second fault information to the MAC chip. The first fault information indicates that the second interface detects a fault, and the second fault information indicates that the fault is from the second interface. Because the PHY chip has received the first fault information sent by the second interface, a link between the PHY chip and the second interface is normal. Similarly, if the MAC chip can normally receive the second fault information, it indicates that communication between the PHY chip and the MAC chip is also normal. Therefore, it may be determined that the fault is from the second interface. According to this solution, after the second interface sends the first fault information to the PHY chip of the first interface, the PHY chip of the first interface may send the first fault information and the second fault information to the MAC chip of the first interface, to indicate that the fault is from the second interface. It can be learned that, according to this solution, a specific location of the fault can be determined.

In a possible implementation, during specific implementation of sending the second fault information by the PHY chip to the MAC chip, the PHY chip may include the second fault information in a data block and send the data block to the MAC chip. In this manner, after receiving the data block sent by the PHY chip, the MAC chip may parse the data block to obtain the second fault information.

In a possible implementation, if the PHY chip of the first interface and the MAC chip of the first interface are connected through a USAUI, an overhead block is communicated between the PHY chip of the first interface and the MAC chip of the first interface. Therefore, in this case, during specific implementation of sending the second fault information by the PHY chip to the MAC chip, the PHY chip may send, to the MAC chip, an overhead block carrying the second fault information. In this manner, after receiving the overhead block sent by the PHY chip, the MAC chip may parse the overhead block to obtain the second fault information.

In a possible implementation, the PHY chip may send a control character sequence to the MAC chip. In this case, during specific implementation of sending the second fault information by the PHY chip to the MAC chip, the PHY chip may send, to the MAC chip, a control character sequence carrying the second fault information. In this manner, after receiving the control character sequence sent by the PHY chip, the MAC chip may parse the control character sequence to obtain the second fault information.

In a possible implementation, in addition to sending the second fault information to the MAC chip, the PHY chip may further send the first fault information to the MAC chip. In this way, the MAC chip may not only determine that the fault occurs in the second interface, but also determine that an interface detecting the fault is the second interface.

According to a second aspect, an embodiment of this application provides a fault information processing method. The method may be applied to a first interface, and the first interface includes a PHY chip. In an example, the method may be performed by the PHY chip of the first interface. After determining that a receiving fault occurs in the PHY chip, the PHY chip of the first interface may send first fault information, where the first fault information indicates that the fault is from the PHY chip of the first interface. According to this solution, when the fault occurs in the PHY chip of the first interface, the first fault information indicating a specific location of the fault may be sent. It can be learned that, according to this solution, the specific location of the fault can be determined.

In a possible implementation, when determining that a fault occurs in a link from a first chip to the PHY chip, the PHY chip of the first interface may determine that the fault occurs in the PHY chip. The first chip is a chip communicating with the PHY chip. In an example, the first chip may be the MAC chip of the first interface. In another example, the first chip may be a PHY chip of a second interface.

In a possible implementation, the PHY chip of the first interface may send the first fault information to a controller, so that the controller learns that the fault occurs in the PHY chip of the first interface, and then takes a further measure.

In a possible implementation, the PHY chip of the first interface may send the first fault information to the MAC chip of the first interface, so that the MAC chip of the first interface takes a further measure based on the first fault information.

In a possible implementation, in addition to sending the first fault information, the PHY chip of the first interface may further send second fault information to the second interface, where the second fault information indicates that the first interface detects the fault. In this way, the first interface may not only determine, based on the first fault information, that the fault is from the PHY chip of the first interface, but also determine, based on the second fault information, that the first interface detects the fault.

In a possible implementation, if the first chip is the MAC chip of the first interface, in addition to sending the first fault information to the MAC chip of the first interface, the PHY chip of the first interface may further send third fault information to the MAC chip of the first interface. The third fault information indicates that a chip other than the MAC chip of the first interface detects the fault. After receiving the third fault information, the MAC chip of the first interface may determine that the chip other than the MAC chip of the first interface detects the fault.

In a possible implementation, if the first chip is the PHY chip of the second interface, in addition to sending the first fault information to the MAC chip of the first interface, the PHY chip of the first interface may further send fourth fault information to the MAC chip of the first interface. The fourth fault information indicates that the first interface detects the fault. In this way, the MAC chip of the first interface may not only determine, based on the first fault information, that the fault occurs in the PHY chip of the first interface, but also determine, based on the fourth fault information, that the PHY chip of the first interface detects the fault.

According to a third aspect, an embodiment of this application provides a fault information processing apparatus. The apparatus is used in a physical layer PHY chip of a first interface, and the first interface further includes a media access control MAC chip. The apparatus includes: a receiving unit, configured to receive first fault information sent by a second interface, where the first fault information indicates that the second interface detects a fault; and a sending unit, configured to send second fault information to the MAC chip, where the second fault information indicates that the fault is from the second interface.

In a possible implementation, the sending unit is configured to send a data block to the MAC chip, where the data block includes the second fault information.

In a possible implementation, the sending unit is configured to send an overhead block to the MAC chip, where the overhead block includes the second fault information.

In a possible implementation, the sending unit is configured to send a control character sequence to the MAC chip, where the control character sequence includes the second fault information.

In a possible implementation, the sending unit is further configured to send the first fault information to the MAC chip.

According to a fourth aspect, an embodiment of this application provides a fault information processing apparatus. The apparatus is used in a physical layer PHY chip of a first interface. The apparatus includes: a processing unit, configured to determine that a fault occurs in the PHY chip; and a sending unit, configured to send first fault information, where the first fault information indicates that the fault is from the PHY chip.

In a possible implementation, the processing unit is configured to determine that a fault occurs in a link from a first chip to the PHY chip, where the first chip is a MAC chip of the first interface or a PHY chip of a second interface.

In a possible implementation, the sending unit is configured to send the first fault information to the MAC chip of the first interface and/or a controller.

In a possible implementation, the sending unit is further configured to send second fault information to the second interface, where the second fault information indicates that the first interface detects the fault.

In a possible implementation, if the first chip is the MAC chip of the first interface, the sending unit is further configured to send third fault information to the MAC chip of the first interface, where the third fault information indicates that a chip other than the MAC chip of the first interface detects the fault.

In a possible implementation, if the first chip is the PHY chip of the second interface, the sending unit is further configured to send fourth fault information to the MAC chip of the first interface, where the fourth fault information indicates that the first interface detects the fault.

According to a fifth aspect, an embodiment of this application provides a chip. The chip includes a processor and a memory. The memory is configured to store instructions or a computer program. The processor is configured to execute the instructions or the computer program in the memory, to perform the method according to any one of the first aspect, or the method according to any one of the second aspect.

According to a sixth aspect, an embodiment of this application provides a computer-readable storage medium, including instructions or a computer program. When the instructions are run or the computer program is run on a computer, the computer is enabled to perform the method according to any one of the first aspect, or the method according to any one of the second aspect.

According to a seventh aspect, an embodiment of this application provides a computer program product including instructions or a computer program. When the computer program product runs on a computer, the computer is enabled to perform the method according to any one of the first aspect, or the method according to any one of the second aspect.

### BRIEF DESCRIPTION OF DRAWINGS

To describe technical solutions in embodiments of this application or a conventional technology more clearly, the following briefly describes the accompanying drawings for describing embodiments or the conventional technology. It is clear that, the accompanying drawings in the following descriptions show only some embodiments recorded in this application, and a person of ordinary skill in the art may still derive other drawings from these accompanying drawings without creative efforts.
FIG. 1 is a schematic diagram of an example application scenario according to an embodiment of this application;
FIG. 2 is a schematic flowchart of a fault information processing method according to an embodiment of this application;
FIG. 3 is a schematic diagram of a structure of an overhead block according to an embodiment of this application;
FIG. 4 is a schematic flowchart of another fault information processing method according to an embodiment of this application;
FIG. 5 is a schematic diagram of a structure of a fault information processing apparatus according to an embodiment of this application;
FIG. 6 is a schematic diagram of a structure of another fault information processing apparatus according to an embodiment of this application; and
FIG. 7 is a schematic diagram of a structure of a device according to an embodiment of this application.

### DESCRIPTION OF EMBODIMENTS

Currently, fault information may be communicated between Ethernet interfaces by using two signals: a local fault (local fault, LF) and a remote fault (remote fault, RF). For example, for an interface A and an interface B, if the interface A detects a fault, the interface A sends an RF to the interface B, to notify the interface B that the interface A detects the fault. In addition, the interface A may further report an LF to a local controller, to notify the local controller that the interface A detects the fault.

However, in a scenario in which a MAC and a PHY are separated, when a fault occurs in communication between an interface A and an interface B, the interface A or the interface B in which the fault specifically occurs cannot be located by using an LF and an RF. Further, even if it is determined that the fault occurs in the interface A, a MAC chip of the interface A or a PHY chip of the interface A in which the fault specifically occurs cannot be located by using the LF and the RF. Similarly, it is determined that the fault occurs in the interface B, and a MAC chip of the interface B or a PHY chip of the interface B in which the fault specifically occurs cannot be located by using the LF and the RF.

In addition, for some interfaces such as the interface A, the interfaces may have a plurality of MAC chips and a plurality of PHY chips, where the MAC chips are in one-to-one correspondence with the PHY chips. It can be learned from the foregoing descriptions that a MAC chip and a PHY chip in which the fault occurs cannot be located by using the LF and RF.

In view of this, embodiments of this application provide a fault information processing method and apparatus. In the scenario in which PHY and MAC are separated, if the fault occurs in the communication between the interface A and the interface B, the fault information processing method and apparatus can determine a specific location of the fault.

The following describes the fault information processing method provided in embodiments of this application.

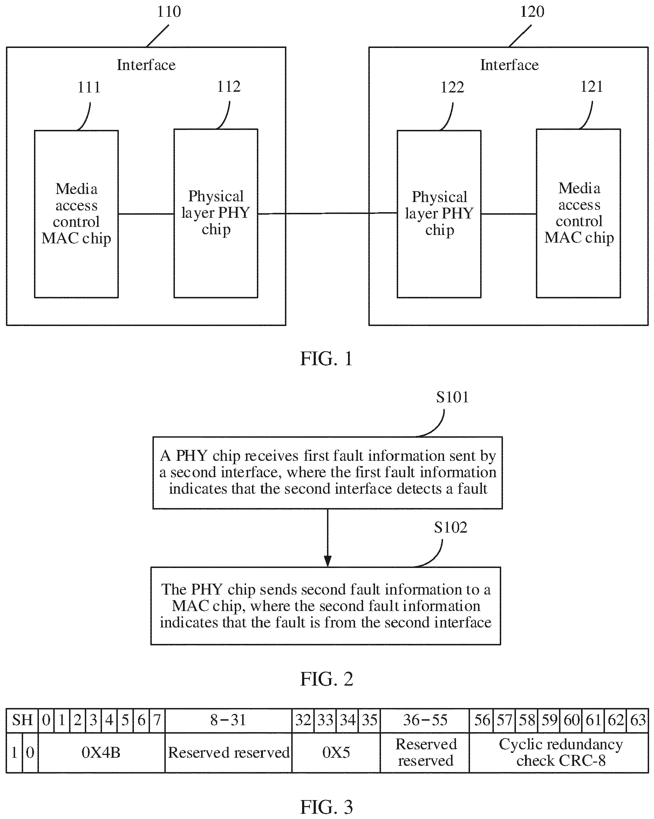

FIG. 1 is a schematic diagram of an example application scenario according to an embodiment of this application.

As shown in FIG. 1, an interface 110 and an interface 120 may communicate with each other. The interface 110 includes a MAC chip 111 and a PHY chip 112, and the interface 120 includes a MAC chip 121 and a PHY chip 122. When the interface 110 sends data to the interface 120, the data may be sent by the PHY chip 112 of the interface 110 to the PHY chip 122 of the interface 120. Similarly, when the interface 120 sends data to the interface 110, the data may be sent by the PHY chip 122 of the interface 120 to the PHY chip 112 of the interface 110.

Both the interface 110 and the interface 120 may be Ethernet interfaces. In addition, in FIG. 1, both the interface 110 and the interface 120 include one PHY chip and one MAC chip. However, FIG. 1 is shown only for ease of understanding. Both the interface 110 and the interface 120 may include a plurality of PHY chips and a plurality of MAC chips.

The interface 110 is used as an example. When the interface 110 includes a plurality of PHY chips and a plurality of MAC chips, the PHY chips are in one-to-one correspondence with the MAC chips. The MAC chip of the interface 110 and the PHY chip of the interface 110 may be connected through a media independent interface (media independent interface, MII), or may be connected through an attachment unit interface (Attachment Unit Interface, AUI). When the interface 110 includes a plurality of PHY chips and a plurality of MAC chips, and the MAC chips and the PHY chips may be connected through a universal slicing attachment unit interface (universal slicing AUI, USAUI), the plurality of MAC chips and the plurality of PHY chips are interconnected by using a serializer/deserializer (serializer/deserializer, SerDes). The SerDes is not described in detail herein.

In addition, in FIG. 1, although both the PHY chip 112 and the PHY chip 122 may include a physical coding sublayer (physical coding sublayer, PCS), a physical medium attachment (physical medium attachment, PMA) sublayer (sublayer), and a physical media dependent (physical media dependent, PMD) layer, details are not described herein.

FIG. 2 is a schematic flowchart of a fault information processing method according to an embodiment of this application. The method shown in FIG. 2 may be applied to a first interface, and the first interface may be, for example, an Ethernet interface. In an example, the first interface may include a PHY chip and a MAC chip. The first interface may be the interface 110 shown in the figure or the interface 120 shown in FIG. 1.

For example, the method shown in FIG. 2 may be implemented by performing S101 and S102.

S101: The PHY chip receives first fault information sent by a second interface, where the first fault information indicates that the second interface detects a fault.

In this embodiment of this application, the second interface is an interface communicating with the first interface. In the scenario shown in FIG. 1, if the first interface is the interface 110, the second interface is the interface 120; or if the first interface is the interface 120, the second interface is the interface 110.

In an implementation of this embodiment of this application, the first fault information may be an RF. For the RF, refer to a related description part of an institute of electrical and electronics engineers (institute of electrical and electronics engineers, IEEE) 802.3. Details are not described herein again.

S 102: The PHY chip sends second fault information to the MAC chip, where the second fault information indicates that the fault is from the second interface.

In an example, it is considered that only based on the first fault information, it can only be determined that the second interface detects the fault, but a specific location of the fault cannot be determined. Since the first interface has received the first fault information, it indicates that a link between the second interface and the first interface is normal. In addition, if the MAC chip of the first interface can normally receive data sent by the PHY chip of the first interface, it indicates that communication between the PHY chip of the first interface and the MAC chip of the first interface is also normal. In view of this, in this embodiment of this application, after receiving the first fault information, the PHY chip of the first interface may send the second fault information to the MAC chip of the first interface, where the second fault information indicates that the fault is from the second interface. If the MAC chip of the first interface has normally received the second fault information, it may be determined, based on the second fault information, that the fault occurs in the second interface. In some embodiments, the second fault information may be referred to as remote PHY fault (remote physical fault, RPF) information.

In an example, the PHY chip of the first interface may send, to the MAC chip of the first interface, a data block carrying the second fault information, to send the second fault information to the MAC chip of the first interface. The data block is not specifically limited in this embodiment of this application. In some embodiments, the data block may be similar to a data block used to transmit an LF and an RF. In an example, code corresponding to the second fault information may be defined, and the code corresponding to the second fault information is carried in the data block and sent to the MAC chip of the first interface. The code corresponding to the second fault information is not specifically limited in this embodiment of this application. In an example, code corresponding to the LF defined in IEEE 802.3 is /K28.4/D0.0/D0.0/D1.0/, code corresponding to the RF defined in IEEE 802.3 is /K28.4/D0.0/D0.0/D2.0/, and the code corresponding to the second fault information may be /K28.4/D0.0/D0.0/D5.0/.

In another example, it is considered that if the PHY chip of the first interface and the MAC chip of the first interface are connected through a USAUI, an overhead block (overhead block) is communicated between the PHY chip of the first interface and the MAC chip of the first interface. Therefore, in an example, the PHY chip of the first interface may include the second fault information in the overhead block and send the overhead block to the MAC chip of the first interface. In an example, the overhead block may include an indicator bit of the second fault information, and the indicator bit of the second fault information may be, for example, a reserved bit in the overhead block. For example, when a value of the bit is 0, it indicates that the overhead block does not carry the second fault information. When a value of the bit is 1, it indicates that the overhead block carries the second fault information. For example, FIG. 3 is a schematic diagram of a structure of an overhead block according to an embodiment of this application. The overhead block shown in FIG. 3 includes 64 bits, where bits 8 to 31 and bits 38 to 55 are reserved bits. In an example, one bit, for example, a bit 9, may be selected from reserved 40 bits as the indicator bit of the second fault information. Other fields in the overhead block shown in FIG. 3 are not described in detail herein.

In addition, as described above, the first interface may include a plurality of PHY chips and a plurality of MAC chips, and each PHY chip of the first interface may perform the method shown in FIG. 2. In this case, each PHY chip may correspond to an indicator bit of one piece of second fault information. The overhead block shown in FIG. 3 is still used as an example for description. For each PHY chip, one bit in the overhead block may be reserved for each PHY chip as the indicator bit of the second fault information. For example, the first interface includes eight PHY chips. In this case, bits 8 to 15 shown in FIG. 3 may be used as indicator bits of second fault information corresponding to the eight PHY chips.

In still another embodiment, the PHY chip of the first interface may send a control character sequence (control character sequence) to the MAC chip of the first interface, and include the second fault information in the control character sequence, to send the second fault information to the MAC chip of the first interface. In an example, the control character sequence may include 64 bits, that is, 8 bytes. Based on an existing special code block in 802.3, content of a byte, for example, the 4^{th} byte, may be self-defined to distinguish the second fault information from other information. For example, refer to the following Table 1 for understanding. Table 1 shows a control character sequence corresponding to the RPF information (namely, the second fault information).

**Table 1**

| Byte 0 | Byte 1 | Byte 2 | Byte 3 | Byte 4 | Byte 5 | Byte 6 | Byte 7 |
|---|---|---|---|---|---|---|---|
| 0x9C | 0x00 | 0x00 | 0x05 | 0x00 | 0x00 | 0x00 | 0x00 |

In Table 1:
0x9C indicates that content of the 8 bytes is a control character sequence; and
that content of the byte 3 is 0x05 indicates that the control character sequence is RPF information.

Table 1 is shown only for ease of understanding, and content of the byte 4 is not limited to 0x05 shown in Table 1.

In addition, in some embodiments, in addition to sending the second fault information to the MAC chip of the first interface, the PHY chip of the first interface may further send the first fault information to the MAC chip of the first interface. For example, after receiving the first fault information, the PHY chip of the first interface transmits the first fault information to the MAC chip of the first interface. In this way, the MAC chip of the first interface may not only determine that the fault occurs in the second interface, but also determine that an interface detecting the fault is the second interface.

It can be learned from the foregoing descriptions that, according to this solution, the first interface can determine the specific location in which the fault occurs when receiving the first fault information. In addition, each PHY chip of the first interface can perform the foregoing S 101 and S102. Therefore, even if the first interface includes the plurality of PHY chips and the plurality of MAC chips, a specific PHY or MAC in which the fault occurs can be located. For example, if the interface 110 includes a plurality of PHY chips and a plurality of MAC chips, after the PHY chip 122 of the interface 120 performs S101 and S102, the MAC chip of the interface 120 may determine that a fault occurs in the MAC chip and/or the PHY chip that are/is in the interface 110 and that communicate/communicates with the PHY chip 122.

In an example of this embodiment of this application, after receiving the second fault information, the MAC chip of the first interface may report the second fault information to a controller, or send the second fault information to a main control chip of the first interface, and the main control chip reports the second fault information to a controller.

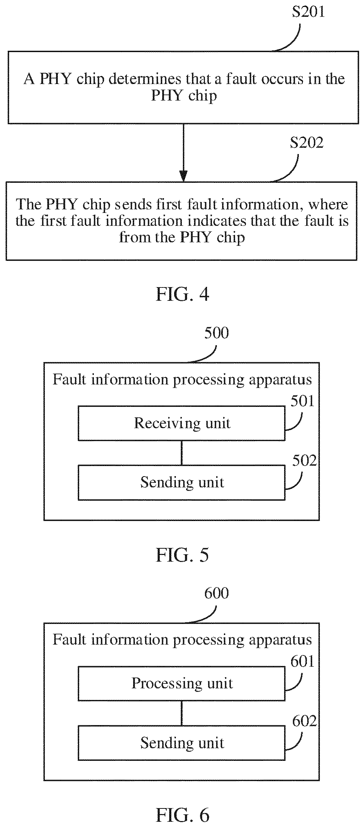

Embodiments of this application further provides a fault information processing method. The following describes the method with reference to FIG. 4.

FIG. 4 is a schematic flowchart of another fault information processing method according to an embodiment of this application. The method shown in FIG. 4 may be applied to a first interface, and the first interface may be, for example, an Ethernet interface. In an example, the first interface may include a PHY chip and a MAC chip. The first interface may be the interface 110 shown in the figure or the interface 120 shown in FIG. 1.

For example, the method shown in FIG. 4 may be implemented by performing S201 and S202.

S201: The PHY chip determines that a fault occurs in the PHY chip.

In this embodiment of this application, the PHY chip of the first interface may receive data sent by a first chip. A receiving fault occurring in the PHY chip may be that the PHY chip of the first interface fails to receive the data sent by the first chip.

In an implementation of this embodiment of this application, when a fault occurs in a link from the first chip to the PHY chip, it may be determined that the fault occurs in the PHY chip of the first interface. In other words, during specific implementation, S201 may be that the PHY chip determines that the fault occurs in the link from the first chip to the PHY chip. An implementation in which the PHY chip determines that the fault occurs in the link from the first chip to the PHY chip is not specifically limited in this embodiment of this application. In an example, if detecting a loss of signal (loss of signal), the PHY chip may determine that the fault occurs in the link from the first chip to the PHY chip.

It should be noted that, because the PHY chip of the first interface may receive data sent by the MAC chip of the first interface or data sent by a PHY chip of a second interface communicating with the first interface, the first chip may be the MAC chip of the first interface or the PHY chip of the second interface.

S202: The PHY chip sends first fault information, where the first fault information indicates that the fault is from the PHY chip.

In this embodiment of this application, when determining that the receiving fault occurs in the PHY chip, the PHY chip may send the first fault information indicating that the fault is from the PHY chip, so that a device or a chip receiving the first fault information determines that the fault occurs in the PHY chip of the first interface. The first fault information mentioned herein may be local PHY fault (local physical fault, LPF) information. In an example, the PHY chip of the first interface may send the first fault information to a controller, so that the controller learns that the fault occurs in the PHY chip of the first interface, and then takes a further measure. In another example, the PHY chip of the first interface may send the first fault information to the MAC chip of the first interface, so that the MAC chip of the first interface takes a further measure based on the first fault information. For example, the MAC chip of the first interface changes data that originally needs to be sent to the PHY chip of the first interface to special data, such as an idle (Idle) code block, an error (Error) code block, an RF, all-zero data, or the like.

During specific implementation, the PHY chip of the first interface may send the first fault information to the MAC chip of the first interface in a plurality of implementations. The following describes several possible implementations.

Implementation 1: The PHY chip of the first interface may send, to the MAC chip of the first interface, a data block carrying the first fault information, to send the first fault information to the MAC chip of the first interface. The data block is not specifically limited in this embodiment of this application. In some embodiments, the data block may be similar to a data block used to transmit an LF and an RF. In an example, code corresponding to the first fault information may be defined, and the code corresponding to the first fault information is carried in the data block and sent to the MAC chip of the first interface. The code corresponding to the first fault information is not specifically limited in this embodiment of this application. In an example, the code corresponding to the first fault information may be /K28.4/D0.0/D0.0/D4.0/.

Implementation 2: It is considered that if the PHY chip of the first interface and the MAC chip of the first interface are connected through a USAUI, an overhead block is communicated between the PHY chip of the first interface and the MAC chip of the first interface. Therefore, in an example, the PHY chip of the first interface may include the first fault information in the overhead block and send the overhead block to the MAC chip of the first interface. In an example, the overhead block may include an indicator bit of the first fault information, and the indicator bit of the first fault information may be, for example, a reserved bit in the overhead block. For example, when a value of the bit is 0, it indicates that the overhead block does not carry the first fault information. When a value of the bit is 1, it indicates that the overhead block carries the first fault information. It may be understood with reference to FIG. 3. The bits 8 to 31 and the bits 38 to 55 in the overhead block shown in FIG. 3 are reserved bits. In an example, one bit may be selected from reserved 40 bits as the indicator bit of the first fault information. For example, a bit 10 may be used as the indicator bit of the first fault information, and the bit 9 may be used as the indicator bit of the second fault information mentioned in S102.

In addition, as described above, the first interface may include a plurality of PHY chips and a plurality of MAC chips, and each PHY chip of the first interface may perform the method shown in FIG. 4. In this case, each PHY chip may correspond to an indicator bit of one piece of first fault information. The overhead block shown in FIG. 3 is still used as an example for description. For each PHY chip, one bit in the overhead block may be reserved for each PHY chip as the indicator bit of the second fault information. For example, the first interface includes eight PHY chips. In this case, bits 16 to 23 shown in FIG. 3 may be used as indicator bits of first fault information corresponding to the eight PHY chips.

Implementation 3: The PHY chip of the first interface may send a control character sequence to the MAC chip of the first interface, and include the first fault information in the control character sequence, to send the first fault information to the MAC chip of the first interface. In an example, the control character sequence may include 64 bits, that is, 8 bytes. Content of a byte, for example, the 4^{th} byte, may be self-defined to distinguish the first fault information from other information. For example, refer to the following Table 2 for understanding. Table 2 shows a control character sequence corresponding to the LPF information (namely, the first fault information).

**Table 2**

| Byte 0 | Byte 1 | Byte 2 | Byte 3 | Byte 4 | Byte 5 | Byte 6 | Byte 7 |
|---|---|---|---|---|---|---|---|
| 0x9C | 0x00 | 0x00 | 0x04 | 0x00 | 0x00 | 0x00 | 0x00 |

In Table 2:
0x9C indicates that content of the 8 bytes is a control character sequence; and that content of the byte 3 is 0x04 indicates that the control character sequence is LPF information.

Table 2 is shown only for ease of understanding, and content of the byte 4 is not limited to 0x04 shown in Table 2.

In an example, in addition to sending the first fault information, the PHY chip of the first interface may further send second fault information to the second interface, where the second fault information indicates that the first interface detects the fault. The second fault information mentioned herein may be an RF. For related content of the PHY chip of the first interface sending the RF and the RF, refer to a related description part of IEEE 802.3. Details are not described herein again.

It may be understood that the PHY chip of the first interface communicates with the second interface via the PHY chip of the second interface. Therefore, the second fault information sent by the PHY chip of the first interface is received by the PHY chip of the second interface. After receiving the second fault information, the PHY chip of the second interface may further send, to a MAC chip of the second interface, fault information indicating that the fault is from the first interface. In this way, the second interface may determine that the fault is from the first interface.

As described above, the first chip may be the MAC chip of the first interface or the PHY chip of the second interface. In some embodiments, if the first chip is the MAC chip of the first interface, in addition to sending the first fault information to the MAC chip of the first interface, the PHY chip of the first interface may further send third fault information to the MAC chip of the first interface. The third fault information indicates that a chip other than the MAC chip of the first interface detects the fault. The third fault information mentioned herein may be an RF. After receiving the third fault information, the MAC chip of the first interface may take a further measure based on the third fault information. For example, the MAC chip of the first interface changes data that originally needs to be sent to the PHY chip of the first interface to special data, such as an idle (Idle) code block, an error (Error) code block, an RF, all-zero data, or the like.

In an example, the PHY chip of the first interface may send the first fault information and the third fault information to the MAC chip of the first interface by using same signaling. For example, the PHY chip of the first interface may include the first fault information and the third fault information in a same packet and send the packet to the MAC chip of the first interface. For another example, the first interface may include both the first fault information and the third fault information in the overhead block and send the overhead block to the MAC chip of the first interface. For still another example, the first interface may send a control character sequence that carries the first fault information and the third fault information to the MAC chip of the first interface.

In another example, the PHY chip of the first interface may separately send the first fault information and the third fault information to the MAC chip of the first interface by using two different pieces of signaling. For example, the third fault information is sent to the MAC chip of the first interface in a conventional RF sending manner. For the conventional RF sending manner, refer to a related description part of IEEE 802.3. Details are not described herein again.

In some embodiments, if the first chip is the PHY chip of the second interface, in addition to sending the first fault information to the MAC chip of the first interface, the PHY chip of the first interface may further send fourth fault information to the MAC chip of the first interface. The fourth fault information indicates that the first interface detects the fault. The fourth fault information mentioned herein may be an LF. After receiving the fourth fault information, the MAC chip of the first interface may take a further measure based on the fourth fault information, for example, send an RF to the PHY chip of the first interface, so that the PHY chip of the first interface transmits the RF to the PHY chip of the second interface.

In an example, the PHY chip of the first interface may send the first fault information and the fourth fault information to the MAC chip of the first interface by using same signaling. For example, the PHY chip of the first interface may include the first fault information and the fourth fault information in a same packet and send the packet to the MAC chip of the first interface. For another example, the first interface may include both the first fault information and the fourth fault information in the overhead block and send the overhead block to the MAC chip of the first interface. For still another example, the first interface may send a control character sequence that carries the first fault information and the fourth fault information to the MAC chip of the first interface.

In another example, the PHY chip of the first interface may separately send the first fault information and the fourth fault information to the MAC chip of the first interface by using two different pieces of signaling. For example, the fourth fault information is sent to the MAC chip of the first interface in a conventional LF sending manner. For the conventional LF sending manner, refer to a related description part of IEEE 802.3. Details are not described herein again.

It may be learned from the foregoing descriptions that, according to this solution, when the receiving fault occurs in the PHY chip, the first fault information indicating a specific location of the fault may be sent. It can be learned that, according to this solution, the specific location of the fault can be determined.

The following describes several possible fault information processing manners with reference to the application scenario shown in FIG. 1.

### Fault information processing manner 1:

The MAC chip 111 detects a fault, and the MAC chip 110 sends an RF to the PHY chip 112. The PHY chip 112 transmits the RF to the PHY chip 122. After receiving the RF, the PHY chip 122 sends an RPF and the RF to the MAC chip 121.

In this scenario, the interface 120 is equivalent to the first interface in the method shown in FIG. 2, the interface 110 is equivalent to the second interface in the method shown in FIG. 2, the RF is equivalent to the first fault information in the method shown in FIG. 2, and the RPF is equivalent to the second fault information in the method shown in FIG. 2.

### Fault information processing manner 2:

The PHY chip 112 determines that a fault occurs in a link from the MAC chip 111 to the PHY chip 112. In this case, the PHY chip 112 sends an RF and an LPF to the MAC chip 111. In addition, the PHY chip 112 sends an RF to the PHY chip 122. After receiving the RF, the PHY chip 122 sends the RF and an RPF to the MAC chip 121.

In this scenario, the interface 110 is equivalent to the first interface in the method shown in FIG. 4, the RF is equivalent to the third fault information in the method shown in FIG. 4, and the LPF is equivalent to the first fault information in the method shown in FIG. 4.

In this scenario, the interface 120 is equivalent to the first interface in the method shown in FIG. 2, the RF is equivalent to the first fault information in the method shown in FIG. 2, and the RPF is equivalent to the second fault information in the method shown in FIG. 2.

### Fault information processing manner 3:

The PHY chip 122 determines that a fault occurs in a link from the PHY chip 112 to the PHY chip 122. In this case, the PHY chip 122 sends an LF and an LPF to the MAC chip 121. In addition, the PHY chip 122 sends an RF to the PHY chip 112. After receiving the RF, the PHY chip 112 sends the RF and an RPF to the MAC chip 111.

In this scenario, the interface 120 is equivalent to the first interface in the method shown in FIG. 4, the LF is equivalent to the fourth fault information in the method shown in FIG. 4, and the LPF is equivalent to the first fault information in the method shown in FIG. 4.

In this scenario, the interface 110 is equivalent to the first interface in the method shown in FIG. 2, the RF is equivalent to the first fault information in the method shown in FIG. 2, and the RPF is equivalent to the second fault information in the method shown in FIG. 2.

Based on the fault information processing methods provided in the foregoing embodiments, an embodiment of this application further provides a corresponding apparatus. The following describes the apparatus with reference to the accompanying drawings.

FIG. 5 is a schematic diagram of a structure of a fault information processing apparatus according to an embodiment of this application. The fault information processing apparatus 500 shown in FIG. 5 may be used in a physical layer PHY chip of a first interface, and the first interface further includes a media access control MAC chip. The fault information processing apparatus 500 may be, for example, configured to perform the fault information processing method corresponding to FIG. 2 provided in the foregoing method embodiments.

The fault information processing apparatus 500 may include, for example, a receiving unit 501 and a sending unit 502.

The receiving unit 501 is configured to receive first fault information sent by a second interface, where the first fault information indicates that the second interface detects a fault.

The sending unit 502 is configured to send second fault information to the MAC chip, where the second fault information indicates that the fault is from the second interface.

In a possible implementation, the sending unit 502 is configured to send a data block to the MAC chip, where the data block includes the second fault information.

In a possible implementation, the sending unit 502 is configured to send an overhead block to the MAC chip, where the overhead block includes the second fault information.

In a possible implementation, the sending unit 502 is configured to send a control character sequence to the MAC chip, where the control character sequence includes the second fault information.

In a possible implementation, the sending unit 502 is further configured to send the first fault information to the MAC chip.

The apparatus 500 is an apparatus corresponding to the method corresponding to FIG. 1 provided in the foregoing method embodiments, and a specific implementation of each unit of the apparatus 500 has a same concept as the foregoing method embodiments. Therefore, for the specific implementation of each unit of the apparatus 500, refer to a description part of the foregoing method embodiments. Details are not described herein again.

FIG. 6 is a schematic diagram of a structure of another fault information processing apparatus according to an embodiment of this application. The fault information processing apparatus 600 shown in FIG. 6 may be used in a physical layer PHY chip of a first interface, and the first interface further includes a media access control MAC chip. The fault information processing apparatus 600 may be, for example, configured to perform the fault information processing method corresponding to FIG. 4 provided in the foregoing method embodiments.

The fault information processing apparatus 600 may include, for example, a processing unit 601 and a sending unit 602.

The processing unit 601 is configured to determine that a fault occurs in the PHY chip.

The sending unit 602 is configured to send first fault information, where the first fault information indicates that the fault is from the PHY chip.

In a possible implementation, the processing unit 601 is configured to determine that a fault occurs in a link from a first chip to the PHY chip, where the first chip is the MAC chip of the first interface or a PHY chip of a second interface.

In a possible implementation, the sending unit 602 is configured to send the first fault information to the MAC chip of the first interface and/or a controller.

In a possible implementation, the sending unit 602 is further configured to send second fault information to the second interface, where the second fault information indicates that the first interface detects the fault.

In a possible implementation, if the first chip is the MAC chip of the first interface, the sending unit 602 is further configured to send third fault information to the MAC chip of the first interface, where the third fault information indicates that a chip other than the MAC chip of the first interface detects the fault.

In a possible implementation, if the first chip is the PHY chip of the second interface, the sending unit 602 is further configured to send fourth fault information to the MAC chip of the first interface, where the fourth fault information indicates that the first interface detects the fault.

The apparatus 600 is an apparatus corresponding to the method corresponding to FIG. 4 provided in the foregoing method embodiments, and a specific implementation of each unit of the apparatus 600 has a same concept as the foregoing method embodiments. Therefore, for the specific implementation of each unit of the apparatus 600, refer to a description part of the foregoing method embodiments. Details are not described herein again.

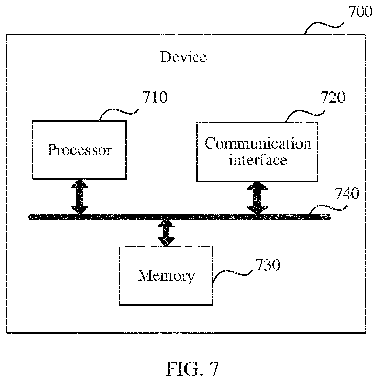

It should be noted that hardware structures of the fault information processing apparatus 500 and the fault information processing apparatus 600 mentioned above may be structures shown in FIG. 7. FIG. 7 is a schematic diagram of a structure of a device according to an embodiment of this application.

Refer to FIG. 7. The device 700 includes a processor 710, a communication interface 720, and a memory 730. The device 700 may include one or more processors 710. In FIG. 7, one processor is used as an example. In this embodiment of this application, the processor 710, the communication interface 720, and the memory 730 may be connected by using a bus system or in another manner. In FIG. 7, for example, the processor 710, the communication interface 720, and the memory 730 are connected by using a bus system 740.

The processor 710 may be a central processing unit (central processing unit, CPU), a network processor (network processor, NP), or a combination of a CPU and an NP. The processor 710 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 730 may include a volatile memory (English: volatile memory), for example, a random access memory (random access memory, RAM). Alternatively, the memory 730 may include a non-volatile memory (English: non-volatile memory), for example, a flash memory (English: flash memory), a hard disk drive (hard disk drive, HDD), or a solid-state drive (solid-state drive, SSD). The memory 730 may alternatively include a combination of the foregoing types of memories. When the device 700 corresponds to the fault information processing apparatus 500, the memory 730 may store, for example, the first fault information mentioned in S 101. When the device 700 corresponds to the fault information processing apparatus 600, the memory 730 may store, for example, the first fault information in S202.

Optionally, the memory 730 stores an operating system and a program, an executable module or a data structure, or a subset thereof, or an extended set thereof, where the program may include various operating instructions to implement various operations. The operating system may include various system programs, to implement various basic services and process a hardware-based task. The processor 710 may read the program stored in the memory 730, to implement the fault information processing methods provided in embodiments of this application.

The bus system 740 may be a peripheral component interconnect (peripheral component interconnect, PCI) bus, an extended industry standard architecture (extended industry standard architecture, EISA) bus, or the like. The bus system 740 may be classified into an address bus, a data bus, a control bus, and the like. For ease of representation, only one bold line is used for representation in FIG. 7, but this does not mean that there is only one bus or only one type of bus.

An embodiment of this application further provides a computer-readable storage medium, including instructions or a computer program. When the instructions are run or the computer program is run on a computer, the computer is enabled to perform the fault information processing methods provided in the foregoing embodiments.

An embodiment of this application further provides a computer program product including instructions or a computer program. When the computer program product runs on a computer, the computer is enabled to perform the fault information processing methods provided in the foregoing embodiments.

The apparatus in this application may be a network device such as a switch or a router, may be a server, or may be a part of a network device or a server such as a chip on the network device. In some embodiments, the apparatus in this application may alternatively be a function module deployed in a device or a network.

In the specification, claims, and accompanying drawings of this application, the terms "first", "second", "third", "fourth", and the like (if existent) are intended to distinguish between similar objects but do not necessarily indicate a specific order or sequence. It should be understood that the data used in such a way are interchangeable in proper cases so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or parts may be combined or integrated into another system, or some features may be ignored or not performed. In addition, the displayed or discussed mutual couplings or direct couplings or communication connections may be implemented through some interfaces. The indirect couplings or communication connections between the apparatus or units may be implemented in electronic, mechanical, or other forms.

The units described as separate components may or may not be physically separate, and components displayed as units may or may not be physical units, in other words, may be located in one location, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on such an understanding, the technical solutions of this application essentially, or the part contributing to the conventional technology, or all or some of the technical solutions may be embodied in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by the software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are merely used to describe the technical solutions of this application, but not to limit the technical solutions. Although this application is described in detail with reference to the foregoing embodiments, a person of ordinary skill in the art should understand that modifications may still be made to the technical solutions recorded in the foregoing embodiments or equivalent replacements may be made to some technical features thereof. However, these modifications or replacements do not make the essence of the corresponding technical solutions depart from the scope of the technical solutions of embodiments of this application

## Claims

1. A fault information processing method, wherein the method is performed by a physical layer PHY chip of a first interface, the first interface further comprises a media access control MAC chip, and the method comprises:
receiving, by the PHY chip, first fault information sent by a second interface, wherein the first fault information indicates that the second interface detects a fault; and
sending, by the PHY chip, second fault information to the MAC chip, wherein the second fault information indicates that the fault is from the second interface.

2. The method according to claim 1, wherein the sending, by the PHY chip, second fault information to the MAC chip comprises:
sending, by the PHY chip, a data block to the MAC chip, wherein the data block comprises the second fault information.

3. The method according to claim 1, wherein the sending, by the PHY chip, second fault information to the MAC chip comprises:
sending, by the PHY chip, an overhead block to the MAC chip, wherein the overhead block comprises the second fault information.

4. The method according to claim 1, wherein the sending, by the PHY chip, second fault information to the MAC chip comprises:
sending, by the PHY chip, a control character sequence to the MAC chip, wherein the control character sequence comprises the second fault information.

5. The method according to claim 1, wherein the method further comprises:
sending, by the PHY chip, the first fault information to the MAC chip.

6. A fault information processing method, wherein the method is performed by a physical layer PHY chip of a first interface, and the method comprises:
determining, by the PHY chip, that a fault occurs in the PHY chip; and
sending, by the PHY chip, first fault information, wherein the first fault information indicates that the fault is from the PHY chip.

7. The method according to claim 6, wherein the determining, by the PHY chip, that a fault occurs in the PHY chip comprises:
determining, by the PHY chip, that a fault occurs in a link from a first chip to the PHY chip, wherein the first chip is a MAC chip of the first interface or a PHY chip of a second interface.

8. The method according to claim 6 or 7, wherein the sending, by the PHY chip, first fault information comprises:
sending, by the PHY chip, the first fault information to the MAC chip of the first interface and/or a controller.

9. The method according to any one of claims 6 to 8, wherein the method further comprises:
sending, by the PHY chip, second fault information to the second interface, wherein the second fault information indicates that the first interface detects the fault.

10. The method according to claim 7, wherein if the first chip is the MAC chip of the first interface, the method further comprises:
sending, by the PHY chip, third fault information to the MAC chip of the first interface, wherein the third fault information indicates that a chip other than the MAC chip of the first interface detects the fault.

11. The method according to claim 7, wherein if the first chip is the PHY chip of the second interface, the method further comprises:
sending, by the PHY chip, fourth fault information to the MAC chip of the first interface, wherein the fourth fault information indicates that the first interface detects the fault.

12. A fault information processing apparatus, wherein the apparatus is used in a physical layer PHY chip of a first interface, the first interface further comprises a media access control MAC chip, and the apparatus comprises:
a receiving unit, configured to receive first fault information sent by a second interface, wherein the first fault information indicates that the second interface detects a fault; and
a sending unit, configured to send second fault information to the MAC chip, wherein the second fault information indicates that the fault is from the second interface.

13. The apparatus according to claim 12, wherein the sending unit is configured to:
send a data block to the MAC chip, wherein the data block comprises the second fault information.

14. The apparatus according to claim 12, wherein the sending unit is configured to:
send an overhead block to the MAC chip, wherein the overhead block comprises the second fault information.

15. The apparatus according to claim 12, wherein the sending unit is configured to:
send a control character sequence to the MAC chip, wherein the control character sequence comprises the second fault information.

16. The apparatus according to claim 12, wherein the sending unit is further configured to:
send the first fault information to the MAC chip.

17. A fault information processing apparatus, wherein the apparatus is used in a physical layer PHY chip of a first interface, and the apparatus comprises:
a processing unit, configured to determine that a fault occurs in the PHY chip; and
a sending unit, configured to send first fault information, wherein the first fault information indicates that the fault is from the PHY chip.

18. The apparatus according to claim 17, wherein the processing unit is configured to:
determine that a fault occurs in a link from a first chip to the PHY chip, wherein the first chip is a MAC chip of the first interface or a PHY chip of a second interface.

19. The apparatus according to claim 17 or 18, wherein the sending unit is configured to:
send the first fault information to the MAC chip of the first interface and/or a controller.

20. The apparatus according to any one of claims 17 to 19, wherein the sending unit is further configured to:
send second fault information to the second interface, wherein the second fault information indicates that the first interface detects the fault.

21. The apparatus according to claim 18, wherein if the first chip is the MAC chip of the first interface, the sending unit is further configured to:
send third fault information to the MAC chip of the first interface, wherein the third fault information indicates that a chip other than the MAC chip of the first interface detects the fault.

22. The apparatus according to claim 18, wherein if the first chip is the PHY chip of the second interface, the sending unit is further configured to:
send fourth fault information to the MAC chip of the first interface, wherein the fourth fault information indicates that the first interface detects the fault.

23. A chip, comprising a processor and a memory, wherein
the memory is configured to store instructions or a computer program; and
the processor is configured to execute the instructions or the computer program, to perform the method according to any one of claims 1 to 11.

24. A computer-readable storage medium, comprising instructions or a computer program, wherein when the instructions are run or the computer program is run on a computer, the computer is enabled to perform the method according to any one of claims 1 to 11.

25. A computer program product, wherein the computer program product comprises instructions or a computer program; and when the computer program product runs on a computer, the computer is enabled to perform the method according to any one of claims 1 to 11.
